# DEMANDE DE BREVET EUROPEEN

(11) **EP 3 985 865 A1**
(43) Date de publication de la demande: **20.04.2022**
(21) Numéro de dépôt: 21201344.5
(22) Date de dépôt: 07.10.2021
(51) Int. Cl.: H02S 40/34

(54) **EQUIPEMENT FONCTIONNALISÉ DOTÉ D'UN OU PLUSIEURS ÉLÉMENTS DE COUVERTURE FONCTIONNALISÉS**

(30) Priorité: 19.10.2020 FR 2010725
(71) Demandeur: Commissariat à l'énergie atomique et aux énergies alternatives, 75015 Paris (FR)
(72) Inventeur: CHAINTREUIL, Nicolas, 38054 GRENOBLE CEDEX 09 (FR); CLAUDON, Fabrice, 38054 GRENOBLE CEDEX 09 (FR); LE BLEVENNEC, Yoann, 38054 GRENOBLE CEDEX 09 (FR); THONY, Philippe, 38054 GRENOBLE CEDEX 09 (FR)
(74) Mandataire: INNOV-GROUP

(57) **Abrégé**

L'invention concerne un équipement fonctionnalisé comprenant :
- Un ou plusieurs éléments de couverture (1), chacun fonctionnalisés par un module de type producteur et/ou récepteur d'énergie électrique,
- Deux conducteurs électriques (L1, L2) destinés à être connectés à un réseau électrique,
- Pour chaque élément de couverture fonctionnalisé, un premier bloc inductif (B1) connecté au module dudit élément de couverture fonctionnalisé et un deuxième bloc inductif (B2) connecté en parallèle aux deux conducteurs électriques,
- Ledit premier bloc inductif (B1) et ledit deuxième bloc inductif (B2) étant positionnés l'un par rapport à l'autre pour échanger de l'énergie par technologie inductive,
- Les deux conducteurs électriques (L1, L2) étant intégrés à un élément de support (50) d'une structure de support ou dans une nappe (60) fixée à la structure de support ou destinée à être fixée à une infrastructure existante recouverte par l'équipement fonctionnalisé.

## Description

### Domaine technique de l'invention

La présente invention se rapporte à un équipement fonctionnalisé doté d'un ou plusieurs éléments de couverture fonctionnalisés.

### Etat de la technique

Un système de liaison électrique sans contact est réalisé en positionnant l'un par rapport à l'autre un premier ensemble portant un enroulement primaire et un deuxième ensemble portant un enroulement secondaire. Les deux enroulements sont galvaniquement et électriquement isolés l'un de l'autre et placés en vis-à-vis (à une distance suffisante l'un de l'autre), assurant entre eux un couplage électromagnétique. Entre les deux ensembles, la transmission d'énergie est donc réalisée sans contact, par induction.

Pour assurer une liaison électrique sans contact fiable et avec un bon rendement, le positionnement relatif des deux enroulements doit être parfaitement réglé. La demande de brevet FR3038204A1 rappelle ce principe. Ce document propose pour cela de placer les deux enroulements dans deux boîtiers de formes complémentaires et de dimensions quasi-identiques pour venir s'emboîter l'un sur l'autre.

Il a également été proposé d'utiliser le principe de l'induction dans le domaine des équipements de type photovoltaïque. Pour chaque panneau photovoltaïque de l'installation, un coupleur inductif primaire et un coupleur inductif secondaire sont positionnés en regard, permettant un transfert de l'énergie électrique sans contact du panneau vers un réseau électrique ou vers un système de stockage.

La demande de brevet WO2019/115910A1 décrit ainsi une route formée par l'assemblage de dalles photovoltaïques juxtaposées. Chaque dalle est munie d'un coupleur inductif primaire qui est positionné en regard d'un coupleur inductif secondaire placé dans une cavité. La demande de brevet EP3609050A1 propose pour sa part d'utiliser un mécanisme qui permet de déplacer le coupleur inductif secondaire situé sous une dalle photovoltaïque, grâce à une tirette, en vue de venir le placer en vis-à-vis du coupleur inductif primaire, solidaire de la dalle photovoltaïque.

La demande de brevet EP3499584A1 concerne la route solaire réalisée par la juxtaposition de dalles de revêtement photovoltaïques. La transmission d'énergie sans contact est réalisée par technologie inductive, à l'aide d'un bloc inductif primaire et d'un bloc inductif secondaire, entre deux surfaces de couplage.

Même si l'emploi de solutions de transfert d'énergie par induction permet de faciliter l'installation de l'équipement, certaines contraintes demeurent présentes. En effet, il est parfois difficile pour une même personne de réaliser à la fois le montage de la structure de support des éléments qui portent l'architecture photovoltaïque et le câblage électrique.

Le but de l'invention est donc de proposer un équipement fonctionnalisé qui soit fiable, simple à installer pour former une surface plus ou moins étendue, par exemple la surface d'une infrastructure telle qu'une toiture, une façade, une route ou celle d'une structure apposée sur une telle infrastructure, et qui permette éventuellement de limiter le nombre d'intervenants lors de son installation.

### Exposé de l'invention

Ce but est atteint par un équipement fonctionnalisé qui comporte
- Un ou plusieurs éléments de couverture, chacun fonctionnalisés par un module de type producteur et/ou récepteur d'énergie électrique,
- Une structure de support arrangée pour supporter lesdits un ou plusieurs éléments de couverture,
- Deux conducteurs électriques destinés à être connectés à un réseau électrique,
- Pour chaque élément de couverture fonctionnalisé, un premier bloc inductif connecté au module dudit élément de couverture fonctionnalisé via une première liaison électrique et un deuxième bloc inductif connecté en parallèle aux deux conducteurs électriques via une deuxième liaison électrique,
- Ledit premier bloc inductif et ledit deuxième bloc inductif étant positionnés l'un par rapport à l'autre pour échanger de l'énergie par technologie inductive,
- Les deux conducteurs électriques étant intégrés à un élément de support de la structure de support ou dans une nappe fixée à la structure de support ou destinée à être fixée à une infrastructure existante recouverte par l'équipement fonctionnalisé.

Selon une réalisation particulière, la première liaison électrique est une liaison souple par câble.

Selon une autre réalisation particulière la deuxième liaison électrique est une liaison souple par câble.

Selon une autre réalisation particulière, la deuxième liaison électrique est intégrée dans un élément rigide fixé audit élément de support.

Selon une autre réalisation particulière, le premier bloc inductif comporte un premier boîtier dans lequel est logé un premier enroulement électrique.

Selon une autre réalisation particulière, le premier bloc inductif comporte un premier convertisseur électrique, auquel est connecté ledit premier enroulement.

Selon une autre réalisation particulière, le deuxième bloc inductif comporte un deuxième boîtier dans lequel est logé un deuxième enroulement électrique.

Selon une autre réalisation particulière, le deuxième bloc inductif comporte un deuxième convertisseur électrique, auquel est connecté ledit deuxième enroulement.

Selon une autre réalisation particulière, le premier boîtier et le deuxième boîtier comportent des moyens d'emboîtement complémentaires.

Selon une autre réalisation particulière, la structure de support comporte deux éléments de support en parallèle, chaque élément de support comporte des organes de positionnement de chaque élément de couverture.

Selon une autre réalisation particulière, la structure de support comporte un rail d'interconnexion électrique fixé en transverse entre lesdits deux éléments de support (50) et agencé pour se connecter électriquement aux conducteurs électriques intégrés dans chaque élément de support.

Selon une autre réalisation particulière, la structure de support comporte une patte de fixation portant ledit élément de support.

Selon une autre réalisation particulière, l'équipement comporte au moins un élément de couverture fonctionnalisé par un module de type photovoltaïque.

Selon une autre réalisation particulière, l'équipement comporte au moins un élément de couverture fonctionnalisé par un module de type lumineux.

### Brève description des figures

D'autres caractéristiques et avantages vont apparaître dans la description détaillée qui suit faite en regard des dessins annexés dans lesquels :
- Les figures 1A et 1B représentent de manière schématique l'architecture électrique de l'équipement fonctionnalisé de l'invention, selon deux réalisations distinctes ;
- La figure 2 représente de manière schématique, un exemple du système de liaison sans contact employé dans l'équipement fonctionnalisé de l'invention ;
- Les figures 3A à 3C représentent trois variantes de réalisation d'un élément de couverture fonctionnalisé employé dans l'équipement fonctionnalisé de l'invention ;
- Les figures 4A et 4B représentent deux exemples de réalisation de l'équipement fonctionnalisé de l'invention ;
- Les figures 5A à 5C représentent trois premières variantes de réalisation du côté secondaire de l'équipement fonctionnalisé de l'invention ;
- La figure 6 représente un mode de réalisation particulier du côté secondaire de l'équipement fonctionnalisé de l'invention, basée sur la réalisation de la figure 5A ;
- La figure 7 illustre une variante de mise en oeuvre de l'équipement fonctionnalisé de l'invention, basée sur la solution de la figure 6 ;
- La figure 8 illustre une variante de mise en œuvre de l'équipement fonctionnalisé de l'invention, basée sur la solution de la figure 6 ;
   [Fig.9]

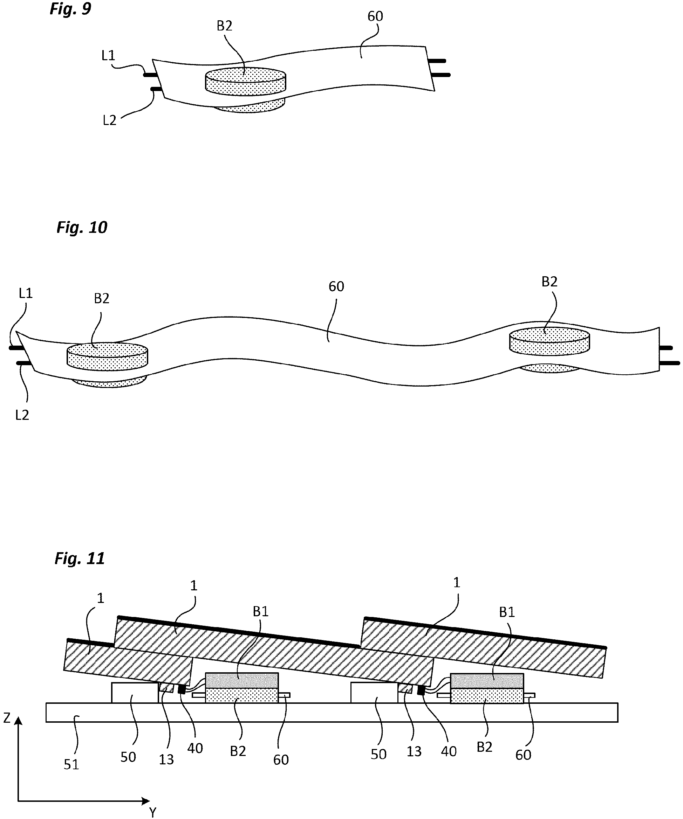

- La figure 9 représente une autre variante de réalisation du côté secondaire de l'équipement fonctionnalisée de l'invention ;
- La figure 10 représente un mode de réalisation particulier du côté secondaire de l'équipement fonctionnalisé de l'invention, basée sur la variante de la figure 9 ;
- La figure 11 illustre une variante de mise en œuvre de l'équipement fonctionnalisé de l'invention, basée sur la solution de la figure 10 ;

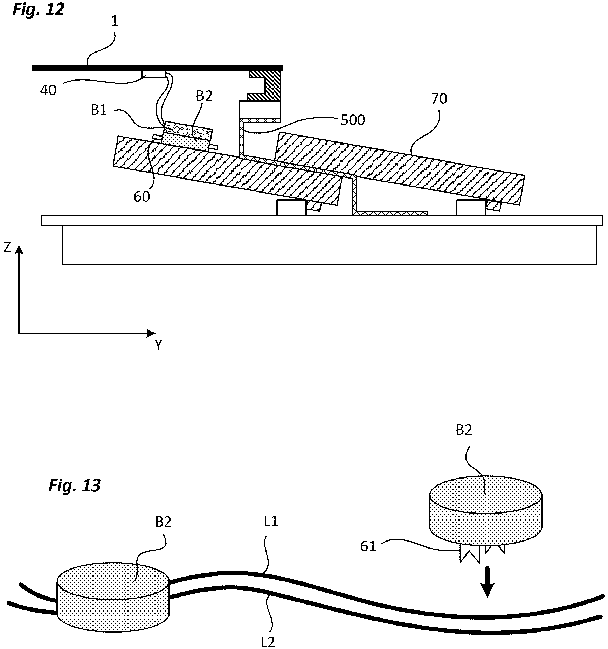

- La figure 12 illustre une variante de mise en œuvre de l'équipement fonctionnalisé de l'invention, basée sur la solution de la figure 10 ;
- La figure 13 représente une réalisation particulière du côté secondaire de l'équipement fonctionnalisé de l'invention ;

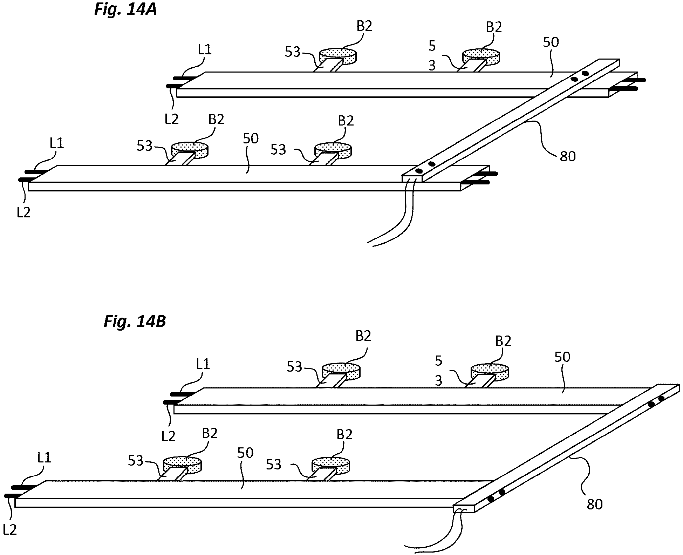

- Les figures 14A et 14B représentent deux variantes de réalisation de la structure d'accueil employée dans l'équipement fonctionnalisé de l'invention ;

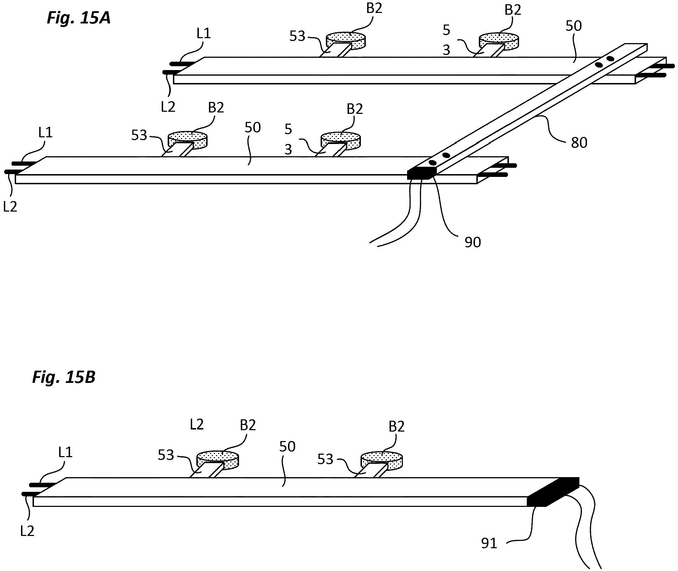

- Les figures 15A et 15B représentent deux autres variantes de réalisation de la structure d'accueil employée dans l'équipement fonctionnalisé de l'invention ;

### Description détaillée d'au moins un mode de réalisation

Dans la suite de la description, le terme DC signifie "Direct Current" pour courant continu, le terme AC signifie "Alternating Current" pour courant alternatif. On parlera aussi de tension AC pour exprimer une tension alternative et de tension DC pour exprimer une tension continue.

De manière connue, dans un convertisseur électrique, un étage de type AC comporte des interrupteurs de puissance commandés par une unité de commande pour fournir une tension variable. Un étage DC peut également être actif et comporter des interrupteurs de puissance commandés par l'unité de commande ou réalisé par des composants passifs, par exemple sous la forme d'un pont de diodes.

L'invention vise un équipement fonctionnalisé comportant plusieurs éléments de couverture fonctionnalisés 1.

Par élément de couverture, on entend toute solution qui permet de former une surface plus ou moins étendue, par exemple :
- Une zone circulable de type route, parking, trottoir, piste cyclable,
- Une toiture ou façade d'un bâtiment, d'une habitation,
- Le toit d'un véhicule automobile,
- Tous types d'infrastructures susceptibles d'être installées et ajoutées sur une architecture existante telle qu'une route, un parking, un trottoir, un toit ou façade d'un bâtiment, ...

L'élément de couverture se présente ainsi sous la forme d'un panneau ou d'une dalle, ayant une face interne destinée à venir en appui contre une structure de support et/ou se fixer sur cette structure de support et une face externe orientée vers l'extérieur.

Le panneau présente avantageusement une forme rectangulaire. Bien entendu, toute autre forme pourrait être envisagée.

Chaque élément de couverture 1 est dit fonctionnalisé car il est de type producteur d'énergie électrique ou récepteur d'énergie électrique.

De manière non limitative, chaque élément de couverture fonctionnalisé 1 peut par exemple comporter :
- Un module photovoltaïque destiné à être positionné sur la zone à recouvrir afin de fonctionnaliser ladite zone pour générer de l'énergie électrique grâce à l'énergie solaire ;
- Un module à fonction de signalisation ou module lumineux, destiné à être positionné sur la zone à recouvrir et comportant par exemple des diodes lumineuses fournissant un éclairage ;
- Un module de recharge électrique par induction, par exemple pour charger un véhicule automobile électrique ;
- Un module de détection avec un ou plusieurs capteurs de tous types, par exemple pour mesurer la température, l'hygrométrie, la vitesse du vent, pour détecter une présence ;
- Un module de vidéosurveillance pour surveiller une zone ;
- Un module de chauffage pour chauffer une surface ;
- Un module de connexion à un réseau de communication sans-fil de type WiFi, Bluetooth, 4G, 5G ou équivalent ;

Chaque élément de couverture fonctionnalisé 1 peut comporter un corps d'accueil de sa partie fonctionnelle. Ce corps d'accueil peut être :
- Un boîtier étanche dans lequel, par exemple, sont logées des diodes électroluminescentes d'un module à fonction de signalisation,
- Une plaque de support ou un encadrement ; par exemple dans le cas d'un module photovoltaïque, cette plaque peut prendre la forme d'une tuile portant des cellules photovoltaïques du module.

Le corps définit avantageusement la forme externe de l'élément de couverture. Il peut être choisi rectangulaire. Selon le niveau d'intégration, le corps de l'élément de couverture fonctionnalisé peut également loger d'autres composants du système.

L'équipement peut comporter un ou plusieurs de ces éléments. La juxtaposition de plusieurs de ces éléments permet de recouvrir une zone, pour former une route, une toiture ou une autre infrastructure. Les éléments peuvent alors par exemple être alignés suivant plusieurs rangées.

Selon son module fonctionnel, l'élément de couverture peut comporter des cellules photovoltaïques réalisées sur sa face externe, des diodes lumineuses chargées d'émettre à travers sa face externe, des capteurs de tous types intégrés à son corps, un module de vidéo-surveillance logé dans son corps, un module de chauffage comportant par exemple une résistance logée dans son corps, un module de connexion sans-fil comportant une antenne et un circuit d'émission/réception logés dans son corps, ou une combinaison d'une ou plusieurs de ces solutions.

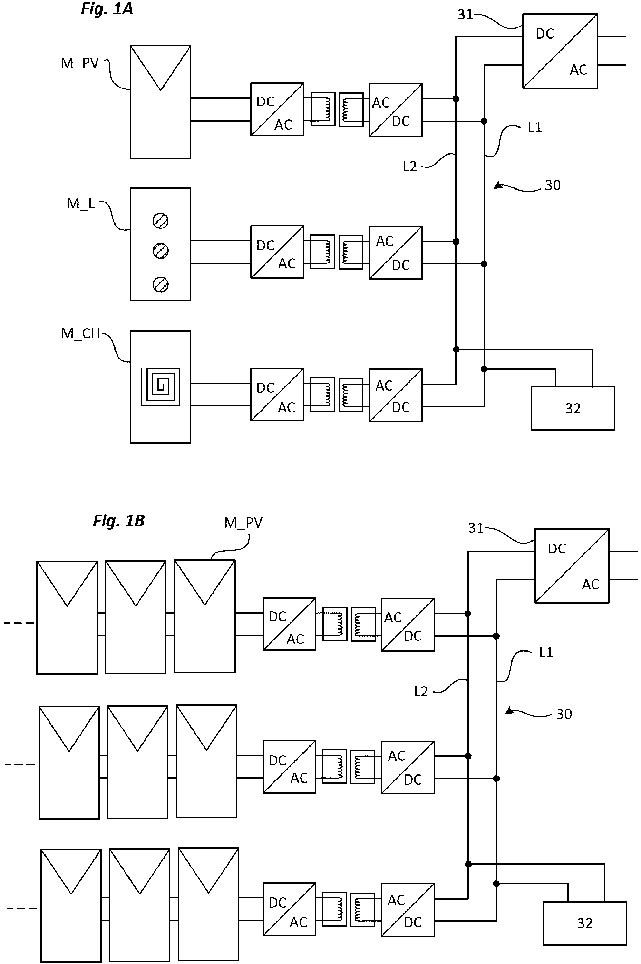

La figure 1A représente l'architecture électrique d'un équipement fonctionnalisé qui comporte plusieurs de ces éléments de couverture fonctionnalisés 1.

Sur cette figure, à titre d'exemple, l'équipement comporte au moins un élément de couverture doté d'un module de type photovoltaïque M_PV, au moins un élément de couverture doté d'un module lumineux M L et au moins un élément de couverture doté d'un module de recharge par induction M_CH. Comme illustré par la figure 1B, il faut noter que plusieurs modules de même type peuvent être connectés en série sur une même ligne. On a ainsi par exemple plusieurs modules photovoltaïques M_PV connectés en série. Dans la suite de la description, on parlera d'un module pour exprimer un seul module ou un groupe de plusieurs modules connectés en série.

Pour chaque module (ou groupe de modules en série), l'équipement fonctionnalisé comporte un système de liaison électrique sans contact distinct, fonctionnant par induction. Via le système, chaque module est connecté aux deux lignes L1, L2 d'un bus 30 (bus de type DC sur les figures 1A et 1B). Les deux lignes L1, L2 du bus peuvent ensuite être connectées sur un convertisseur central 31 de type DC/AC ou AC/AC. Selon l'architecture envisagée côté secondaire, ce convertisseur central 31 reste optionnel. Comme représenté sur les figures 1A et 1B, un système 32 de stockage d'énergie électrique peut être prévu, connecté sur les deux lignes du bus.

Sur les figures 1A et 1B, le bus est représenté en format DC. Cette configuration est à considérer de manière non limitative. Il peut en effet être remplacé par un bus de type AC. En DC ou AC, la tension du bus peut prendre différentes valeurs, par exemple 400 V DC, 400 V AC, 230 V AC. Selon l'architecture envisagée, le convertisseur central 31 pourra être présent ou non.

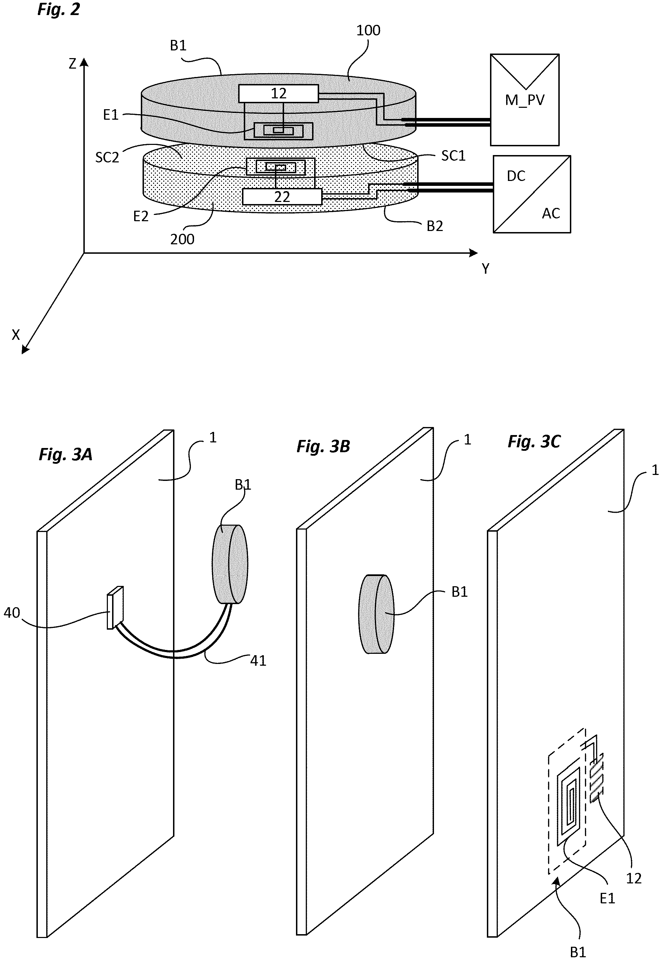

En référence à la figure 2 le système de liaison électrique de type sans contact, employé pour chaque module, comporte un premier bloc B1 de transmission d'énergie sans contact, appelé également bloc inductif B1.

Le premier bloc inductif B1 peut comporter un coupleur inductif, dit primaire, doté d'un enroulement primaire E1 et présentant une première surface de couplage SC1.

Le système de liaison électrique sans contact comporte un deuxième bloc de transmission d'énergie sans contact, appelé également bloc inductif B2. Le deuxième bloc inductif B2 comporte un coupleur inductif, dit secondaire, doté d'un enroulement secondaire E2 et présentant une deuxième surface de couplage SC2.

A titre d'exemple, l'enroulement primaire E1 peut être réalisé par sérigraphie sur une première carte de circuit imprimé ou par toute autre solution connue. La première carte de circuit imprimé est agencée pour positionner ledit enroulement primaire E1 de manière adaptée dans un premier boîtier 100 en vue de réaliser ladite première surface de couplage SC1.

L'enroulement secondaire E2 peut également être réalisé par sérigraphie sur une deuxième carte de circuit imprimé ou par toute autre solution connue.

La deuxième carte est agencée pour positionner ledit enroulement secondaire E2 de manière adaptée dans un deuxième boîtier 200 en vue de réaliser ladite deuxième surface de couplage SC2.

L'un des deux coupleurs forme le primaire d'un transformateur et l'autre des deux coupleurs forme le secondaire du transformateur. Selon la nature du module employé, le transfert d'énergie entre les deux coupleurs sera réalisé dans un sens ou dans l'autre. Bien entendu, les termes "primaire" et "secondaire" sont à comprendre de manière non limitative et en tenant compte du sens de transmission de l'énergie électrique, selon que le module est générateur d'énergie électrique (type module photovoltaïque) ou récepteur d'énergie électrique (type module lumineux). Selon le module visé, le primaire peut en effet devenir le secondaire et le secondaire devenir le primaire.

Le bloc inductif B1 peut intégrer un bloc 12 de conversion électrique destiné à réaliser une conversion de type DC/AC (appelé également conversion Continu/Alternatif). Le convertisseur de type DC/AC est ainsi connecté d'une part aux bornes du module de l'élément de couverture, par exemple de type module photovoltaïque, et d'autre part au coupleur inductif primaire. L'énergie électrique générée par les cellules photovoltaïques du module M_PV est ainsi transmise par le coupleur inductif primaire vers le coupleur inductif secondaire sans contact, par couplage électromagnétique entre les deux coupleurs.

De même, le bloc inductif B2 peut intégrer un bloc 22 de conversion électrique destiné à réaliser une conversion de type AC/DC (appelé également conversion Alternatif/Continu). Le convertisseur de type AC/DC est ainsi connecté d'une part au coupleur inductif secondaire et d'autre part aux deux lignes du bus DC. Ce bloc 22 de conversion est optionnel, une conversion AC/AC pouvant être réalisée de manière centralisée par le convertisseur central 31 commun à tous les blocs inductifs B2 présents.

La connexion du bloc B1 à son module peut être réalisée en employant une boîte de jonction 40 fixée audit module. Bien entendu, une intégration plus ou moins importante du bloc inductif B1 et de ses composants dans le corps de l'élément de couverture fonctionnalisé peut être envisagée.

En référence à la figure 2, à titre d'exemple, le premier bloc inductif B1 et le deuxième bloc inductif B2 peuvent être réalisés chacun sous une forme monobloc, c'est-à-dire qu'ils intègrent chacun dans un boîtier tous les éléments nécessaires à leur fonctionnement. Les deux boîtiers peuvent être de formes complémentaires et de dimensions adaptées pour s'emboîter l'un avec l'autre. Ils peuvent ainsi présenter une forme de cylindre de révolution, l'une de ses bases formant la surface de couplage.

Bien entendu, il est également possible d'intégrer le bloc inductif dans le corps de l'élément de couverture. Cette intégration pourra dépendre de différents facteurs, notamment de la forme et des dimensions de l'élément de couverture fonctionnalisé porteur. Ce dernier peut se présenter différentes formes et être dotées de particularités liées à sa fonction. Il peut notamment comporter des creux, des bosses, des parties planes, des rainures (par exemple pour faciliter l'écoulement de la pluie dans le cas d'un élément de type tuile). L'intégration du bloc inductif B1 et de son enroulement devra être adaptée à ces différentes contraintes. L'un des objectifs pourra être de disposer d'un élément de couverture totalement intégré, dont la forme externe et les dimensions sont identiques à celles d'un élément de couverture classique.

Le système est dit dans un état de fonctionnement opérationnel lorsque son premier bloc inductif B1 et son deuxième bloc inductif B2 sont positionnés l'un par rapport à l'autre de sorte que la première surface de couplage SC1 et la deuxième surface de couplage SC2 soient placées en vis-à-vis d'une manière suffisamment stable (selon les axes X et Y) pour maximiser le rendement et le transfert d'énergie entre l'enroulement primaire E1 et l'enroulement secondaire E2. Par le terme en vis-à-vis, on entend que les deux surfaces de couplage sont avantageusement sensiblement parallèles entre elles et séparées l'une de l'autre d'une distance (suivant l'axe Z) qui est suffisante et adaptée pour obtenir un couplage électromagnétique au moins satisfaisant, avantageusement maximal. A titre d'exemple, les deux boîtiers évoqués ci-dessus peuvent ainsi disposer de moyens d'emboîtement complémentaires (non représentés), leur permettant de s'accoupler mécaniquement pour positionner leurs surfaces de couplage en vis-à-vis et les maintenir fixes l'une par rapport à l'autre, dans les trois directions X, Y et Z.

En référence à la figure 3A, le bloc inductif B1 peut être relié au module de l'élément de couverture via une liaison souple 41, par exemple par câble, et via la boîte de jonction 40 qui est fixée sur l'arrière du panneau. Le bloc B1 peut ainsi être déporté par rapport à l'élément de couverture 1. Dans ce dernier cas, l'installateur peut donc facilement manipuler le bloc B1 et le déplacer pour le positionner en vis-à-vis du bloc inductif B2 correspondant.

En référence à la figure 3B, le bloc inductif B1 peut également être fixé directement sur l'arrière (face interne) du panneau formant l'élément de couverture 1 et connecté électriquement directement aux bornes du module de l'élément de couverture 1.

Le bloc inductif B1 peut également être complètement intégré dans le corps de l'élément de couverture fonctionnalisé. Dans ce cas, le corps de l'élément de couverture fonctionnalisé présente une forme et des dimensions identiques à celles d'un élément de couverture classique. La figure 3C illustre cette réalisation dans laquelle l'enroulement E1 du bloc inductif B1 est intégré dans le corps de l'élément de couverture. Son bloc de conversion électrique 12, par exemple réalisé sous la forme d'une carte électronique, est également intégré audit corps. Le module fonctionnel peut venir occuper tout ou partie de la face externe de l'élément de couverture fonctionnalisé 1.

Du côté secondaire, l'équipement fonctionnalisé comporte une structure de support agencée pour supporter et/ou fixer un ou plusieurs des éléments de couverture de l'équipement.

La structure de support peut se composer d'un ou plusieurs éléments de support.

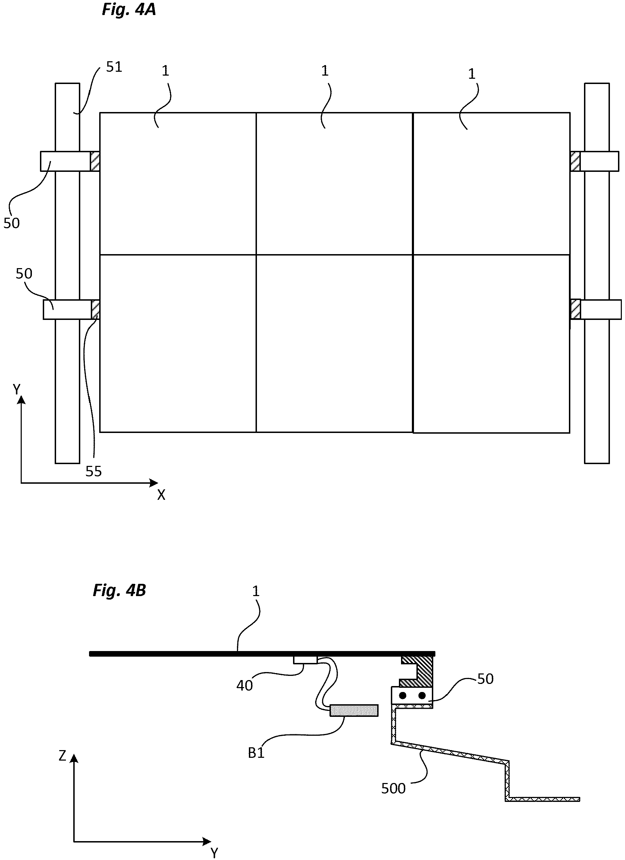

En référence à la figure 4A, dans le cas de la réalisation d'une surface par exemple de type toiture à l'aide de plusieurs éléments de couverture fonctionnalisés, la structure de support peut se composer de plusieurs éléments de support 50 rigides agencés pour supporter les éléments de couverture 1. Les éléments de support sont par exemple formés de montants ou longerons rigides, de forme allongée. A titre d'exemple, ils peuvent être réalisés en bois, en matériau de type PVC ou en aluminium. En cas d'emploi d'un matériau métallique, des solutions d'isolation électrique et de blindage magnétique pourront s'avérer nécessaires.

En référence à la figure 4B, dans le cas de la réalisation d'une infrastructure à fixer sur une architecture existante telle qu'une route ou une toiture, la structure de support peut comporter un dispositif de fixation 500 affecté à chaque élément de couverture ou à plusieurs éléments de couverture. Ce dispositif peut comporter une patte de fixation destinée à venir se fixer sur l'infrastructure existante et un élément de support 50 sur lequel vient se fixer un élément de couverture fonctionnalisé 1.

Le principe de l'invention est notamment de proposer une solution électrique adaptée à la structure de support pour facilement installer les éléments de couverture fonctionnalisés et connecter les modules correspondants.

Selon l'invention, cette solution électrique consiste à :
- Première réalisation : Intégrer les deux lignes du bus DC dans un élément de support particulier (par exemple l'élément de support 50) de la structure de support, ou
- Deuxième réalisation : Intégrer les deux lignes L1, L2 du bus DC dans une nappe 60 souple ou semi-rigide venant se fixer sur la structure de support ou sur l'infrastructure existante.

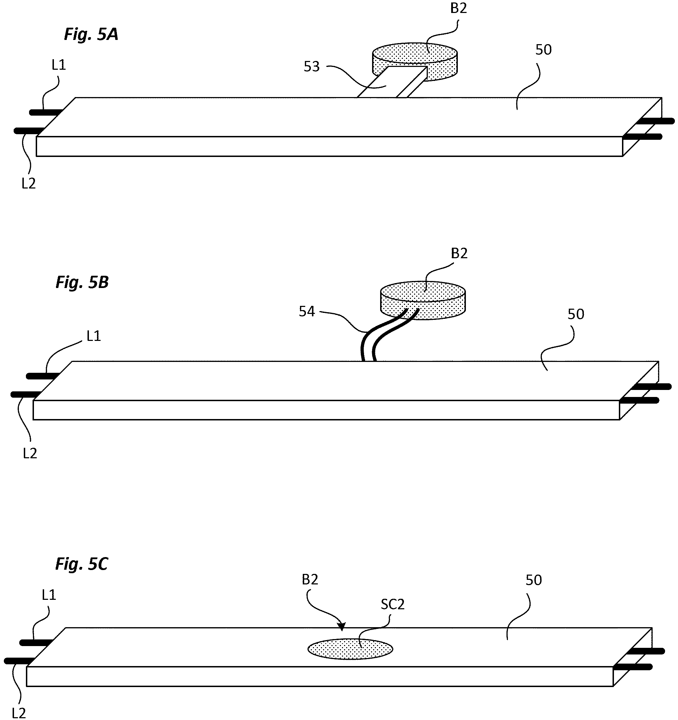

Dans la première réalisation, le bloc inductif B2 peut être connecté aux lignes L1, L2 du bus DC intégrées dans l'élément de support 50, via une liaison rigide 53 (figure 5A), via une liaison souple 54 par câble (figure 5B) ou être intégré directement dans le corps de l'élément de support (figure 5C) et relié par des connexion internes aux deux lignes L1, L2. La liaison rigide 53 peut être formée d'une patte fixée à une extrémité sur l'élément de support et portant le bloc inductif B2 à son extrémité libre. Dans les versions de la figure 5A et 5C, la solution présente l'avantage d'être entièrement monobloc et complètement étanche. Dans la version de la figure 5C, la surface de couplage SC2 du bloc inductif B2 peut être affleurante à la surface d'appui de l'élément de support 30.

Dans la deuxième réalisation illustrée par la figure 9, le bloc inductif B2 peut être connecté aux lignes du bus DC en étant intégré dans la nappe 60. Le bloc inductif B2 comporte ainsi deux bornes amonts sur lesquelles sont connectées les deux lignes du bus DC et deux bornes avals sur lesquelles sont connectées les deux lignes du bus DC.

Dans une variante représentée sur la figure 13, le bloc B2 comporte deux contacts auto-dénudants 61 solidaires du bloc B2 par une liaison mécanique rigide et venant s'insérer à travers la nappe 60 pour se connecter aux deux lignes du bus DC intégrées dans la nappe 60.

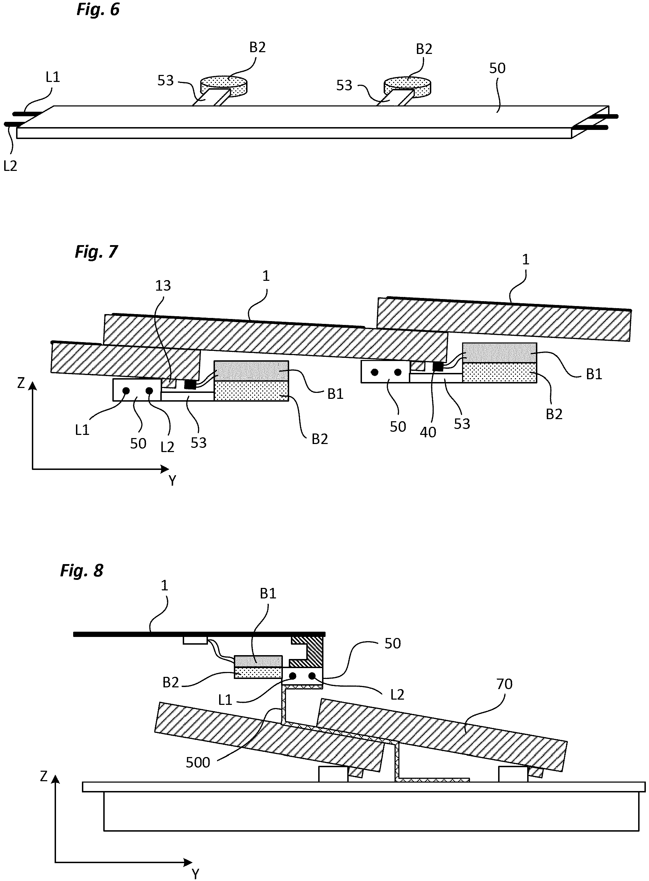

La figure 6 montre une réalisation particulière de l'élément de support 50 de la structure d'accueil.

Dans cette réalisation, plusieurs blocs inductifs B2 sont fixés chacun par une liaison rigide 53 distincte à l'élément support et viennent se connecter électriquement chacun aux deux lignes du bus DC qui sont intégrées dans l'élément de support 50 de la structure.

La figure 7 représente une première application intégrant l'élément de support 50 ainsi fonctionnalisé qui est représenté sur la figure 6. Sur cette figure 7, chaque élément de couverture 1 vient se poser sur la structure. Le bloc inductif B1 connecté au module via une liaison souple par câble est alors positionné contre un bloc inductif B2 disponible, relié au bus DC. Plusieurs éléments de couverture peuvent être juxtaposés le long d'un même élément de support 50 de la structure, chacun de leur bloc inductif B1 venant coopérer avec un bloc inductif B2 distinct disponible le long de l'élément de support fonctionnalisé 50. Comme représenté sur cette figure 6B, plusieurs éléments de couverture fonctionnalisés peuvent être agencés sur plusieurs éléments de support 50 qui s'étendent en parallèle, permettant ainsi de juxtaposer des éléments de couverture dans les deux directions, X et Y.

Chaque élément de support 50 peut comporter des organes de butée 55, arrangés pour caler les éléments de couverture dans la direction X (figure 4A). Chaque élément de couverture peut également comporter un tasseau 13 pour se caler contre l'élément de support fonctionnalisé par le bus DC, dans la direction Y.

La figure 8 montre une deuxième application de l'élément de support fonctionnalisé. Un dispositif de fixation 500 de la structure de support est fixé sur une toiture 70 existante. Le dispositif de fixation comporte un élément de support 50 tel que celui de la figure 6, sur lequel est fixé l'élément de couverture 1. Le bloc inductif B1 associé à l'élément de couverture vient s'associer au bloc inductif B2 disponible sur l'élément de support 50. Plusieurs éléments de couverture 1 peuvent être juxtaposés, leur module étant chacun connecté par couplage électromagnétique de leur bloc inductif B1 avec un bloc inductif B2 distinct intégré à l'élément de support 50.

Sur la figure 10, le côté secondaire de l'équipement est réalisé sous la forme d'une nappe 60 intégrant les deux lignes du bus DC. Plusieurs blocs B2 sont implantés dans la nappe et connectés chacun aux deux lignes du bus DC. La connexion de chaque bloc inductif B2 sur les lignes du bus peut notamment être réalisée en employant les contacts auto-dénudants 61 décrits en liaison avec la figure 13.

Comme illustré par la figure 11, dans une application de type toiture, la nappe 60 peut être étendue parallèlement à des éléments de support de la structure de support, mettant à disposition plusieurs blocs B2 pour connecter des modules.

Le bloc B1, connecté au module via une liaison souple par câble, est alors positionné contre un bloc B2 disponible, intégré à la nappe. Comme précédemment, plusieurs éléments de couverture 1 peuvent être juxtaposés le long d'un même élément de support de la structure, chacun de leur bloc B1 venant coopérer avec un bloc B2 distinct disponible le long de la nappe 60. Comme représenté sur cette figure 11, plusieurs éléments de support fonctionnalisés peuvent être agencés en parallèle sur plusieurs éléments de support 50 qui s'étendent en parallèle, de manière à juxtaposer des éléments de couverture dans les deux direction, X et Y.

Chaque élément de support peut également comporter des organes de butée 55, arrangés pour caler les éléments de couverture 1 dans la direction X. Chaque élément de couverture peut également comporter un tasseau 13 pour se caler contre l'élément de support de la structure, dans la direction Y.

La figure 12 illustre une application de l'équipement fonctionnalisé doté d'une nappe à une infrastructure existante telle qu'une toiture 70. Comme pour la figure 8, le dispositif de fixation 500 de la structure de support est fixé sur une toiture 70 existante. La nappe peut être fixée sur la toiture existante ou sur la structure de support, mettant à disposition plusieurs blocs inductifs B2 le long de la toiture. Le bloc inductif B1 associé à chaque élément de couverture vient s'associer à un bloc inductif B2 disponible. Plusieurs éléments de couverture 1 peuvent être juxtaposés, leur module étant chacun connecté par couplage électromagnétique de leur bloc inductif B1 avec un bloc inductif B2 distinct de la nappe 60.

Les figures 14A et 14B illustrent deux modes de réalisation envisageables pour interconnecter plusieurs éléments de support 50 de la structure de support. Dans les deux réalisations, il s'agit d'employer un rail d'interconnexion 80. Ce rail d'interconnexion vient se fixer en transverse entre deux éléments de support, en milieu de rangée (figure 14A) ou en bout de rangée (figure 14B). Il comporte des moyens de connexion électrique pour se raccorder sur les lignes L1, L2 des bus intégrés aux deux éléments de support.

De même, en référence aux figures 15A et 15B, la liaison électrique des deux lignes L1, L2 du bus vers le réseau, éventuellement via un onduleur central 31, peut être réalisé par un connecteur 90 venant se brancher au bout du rail d'interconnexion 80 (figure 15A) ou par un connecteur 91 venant se brancher au bout de l'élément de support 50 (figure 15B).

La solution de l'invention présente de nombreux avantages. Elle permet de :
- Faciliter la mise en place de l'équipement fonctionnalisé, en permettant à une même personne de monter la structure et de connecter électriquement les modules des éléments de couverture, sans difficulté, via les liaisons électriques sans contact.
- Elle permet de facilement mettre en regard les coupleurs inductifs, assurant ainsi un rendement satisfaisant.
- Elle permet de facilement monter une infrastructure ou d'être installée sur une infrastructure existante.

## Revendications

1. Equipement fonctionnalisé comprenant :
- Un ou plusieurs éléments de couverture (1), chacun fonctionnalisés par un module de type producteur et/ou récepteur d'énergie électrique,
- Une structure de support (50, 51) arrangée pour supporter lesdits un ou plusieurs éléments de couverture (1),
- Deux conducteurs électriques (L1, L2) destinés à être connectés à un réseau électrique,
- Pour chaque élément de couverture fonctionnalisé, un premier bloc inductif (B1) connecté au module dudit élément de couverture fonctionnalisé via une première liaison électrique et un deuxième bloc inductif (B2) connecté en parallèle aux deux conducteurs électriques via une deuxième liaison électrique,
- Ledit premier bloc inductif (B1) et ledit deuxième bloc inductif (B2) étant positionnés l'un par rapport à l'autre pour échanger de l'énergie par technologie inductive,
**Caractérisé en ce que** :
- Les deux conducteurs électriques (L1, L2) sont intégrés à un élément de support (50) de la structure de support ou dans une nappe (60) fixée à la structure de support ou destinée à être fixée à une infrastructure existante recouverte par l'équipement fonctionnalisé.

2. Equipement selon la revendication 1, **caractérisé en ce que** la première liaison électrique est une liaison souple par câble.

3. Equipement selon la revendication 1 ou 2, **caractérisé en ce que** la deuxième liaison électrique est une liaison souple (41) par câble.

4. Equipement selon la revendication 1 ou 2, **caractérisé en ce que** la deuxième liaison électrique est intégrée dans un élément rigide (53) fixé audit élément de support (50).

5. Equipement selon l'une des revendications 1 à 4, **caractérisé en ce que** le premier bloc inductif (B1) comporte un premier boîtier (100) dans lequel est logé un premier enroulement électrique (E1).

6. Equipement selon la revendication 5, **caractérisé en ce que** le premier bloc inductif (B1) comporte un premier convertisseur électrique (12), auquel est connecté ledit premier enroulement (E1).

7. Equipement selon l'une des revendications 5 ou 6, **caractérisé en ce que** le deuxième bloc inductif (B2) comporte un deuxième boîtier (200) dans lequel est logé un deuxième enroulement électrique (E2).

8. Equipement selon la revendication 7, **caractérisé en ce que** le deuxième bloc inductif (B2) comporte un deuxième convertisseur électrique (22), auquel est connecté ledit deuxième enroulement (E2).

9. Equipement selon la revendication 7 ou 8, **caractérisé en ce que** le premier boîtier (100) et le deuxième boîtier (200) comportent des moyens d'emboîtement complémentaires.

10. Equipement selon l'une des revendications 1 à 9, **caractérisé en ce que** la structure de support comporte deux éléments de support (50) en parallèle, chaque élément de support comporte des organes de positionnement (55) de chaque élément de couverture.

11. Equipement selon la revendication 10, **caractérisé en ce que** la structure de support comporte un rail d'interconnexion (80) électrique fixé en transverse entre lesdits deux éléments de support (50) et agencé pour se connecter électriquement aux conducteurs électriques intégrés dans chaque élément de support.

12. Equipement selon l'une des revendications 1 à 9, **caractérisé en ce que** la structure de support comporte une patte de fixation portant ledit élément de support (50).

13. Equipement selon l'une des revendications 1 à 12, **caractérisé en ce qu'**il comporte au moins un élément de couverture fonctionnalisé par un module (M_PV) de type photovoltaïque.

14. Equipement selon l'une des revendications 1 à 13, **caractérisé en ce qu'**il comporte au moins un élément de couverture fonctionnalisé par un module (M_L) de type lumineux.
